# EUROPEAN PATENT APPLICATION

(11) **EP 4 851 011 A1**
(43) Date of publication of application: **09.12.2026**
(21) Application number: 26179965.4
(22) Date of filing: 20.05.2026
(51) Int. Cl.: B61L 23/04, B61L 27/53, G06V 20/56

(54) **METHOD FOR DETECTING RELEVANT EVENTS ALONG A RAILWAY LINE**

(30) Priority: 21.05.2025 IT 202500011572
(71) Applicant: Rete Ferroviaria Italiana S.p.A., 00161 Roma (IT)
(72) Inventor: STRINO, Andrea, 00161 Roma (IT); PLANO, Marco, 00161 Roma (IT); GONNELLI, Mirco, 00161 Roma (IT); D'AVELLA, Salvatore, 00161 Roma (IT); MARANCI, Emilio, 00161 Roma (IT)
(74) Representative: Bruni, Alessandro

(57) **Abstract**

A computer-implemented method for detecting a significant event along a track (1), such as the presence of an obstacle, comprises the steps of acquiring data relating to a morphology of the track (1), processing the data to detect the conformation of said track (1) and the position of a horizon line (4) towards which the track (1) tends, defining a track detection map to be superimposed on a graphical processing of the track (1), wherein the track detection map identifies a zone with respect to which to detect the occurrence of a significant event.

## Description

### FIELD OF THE INVENTION

The present invention relates to a computer-implemented method for the analysis and processing of data acquired by means of sensors and/or acquisition devices, with the aim of detecting the occurrence of a significant event in the vicinity of a track, along a direction of travel of a railway vehicle.

In particular, among the significant events that may occur, there is the presence of an obstacle along a track or in close proximity to the track itself.

### PRIOR ART

In the railway sector, line maintenance operations must be carried out at regular intervals. Such interventions may range from simple ordinary maintenance operations to more complex works, requiring the setting up of a railway worksite.

In both circumstances, similar operations involve the use of machinery, tools, convoys and materials of various types, which may be positioned on the tracks or in their immediate vicinity during the execution of the works.

At the end of the maintenance activities, it is necessary to remove all the equipment and materials used, in order to restore normal train circulation on the affected section.

The failure to remove such elements may constitute an obstacle to railway transit, with the risk of damage to convoys and, in more serious cases, of accidents with potential dangers to persons.

Therefore, before resuming railway circulation, it is extremely important to verify the absence of any obstacle that could compromise the safe transit of trains. Currently, this verification is often performed manually by operators, who may make errors in identifying any impediments.

To verify that the railway line is free from obstacles, in some cases a railway vehicle driven by a qualified operator is used. This vehicle travels the relevant section at low speed, allowing the operator to visually inspect the line and ensure that there are no impediments along the route.

However, this procedure presents some critical issues. In addition to being particularly slow, it depends largely on the accuracy of the operator's visual inspection, introducing a potential margin of human error that can compromise the reliability of the verification.

To overcome these limitations, the use of autonomous or supervised-driving vehicles, specifically designed for the inspection of railway sections, is known in the sector. These vehicles feature a frame to which various functional components are operatively connected, including motors, wheels, control systems and a series of sensors for the acquisition and analysis of data during inspection operations.

Among the sensors commonly used to detect obstacles along the track, radar sensors are included, which allow obstacle detection even in adverse environmental conditions.

However, the effectiveness of such sensors may be compromised by the complexity of the railway environment, generating false positives. In particular, the radar may erroneously identify as obstacles fixed structures located in the vicinity of the tracks, such as signalling poles or other infrastructural elements, causing the activation of unnecessary alarm signals.

The presence of false positives represents a significant problem as it leads to frequent unnecessary slowdowns or stops of autonomous-driving vehicles, compromising the efficiency of the inspection process. Furthermore, in many situations, the intervention of an operator is required to confirm the presence or absence of a real obstacle, with a consequent increase in the time needed to complete the analysis of the railway section.

There is therefore a need for a more advanced and effective methodology for the analysis of a railway section, in particular of a track, in order to ensure accurate identification of obstacles. A more precise analysis system should be able to distinguish between objects that represent an actual impediment to transit and those that, although detected by the sensors, do not constitute a hazard to railway circulation.

The implementation of an innovative solution in this field would make it possible to increase the level of safety of the railway line, ensuring safe transit for convoys, as well as to optimise inspection times, reducing any interruptions to railway traffic and improving the operational efficiency of the entire network monitoring system.

### OBJECTS OF THE INVENTION

The object of the present invention is to allow the automated recognition of a significant event along a track or in its vicinity, such as, for example, the presence of an obstacle.

A further object of the invention is to ensure reliable detection of a significant event along the track, regardless of the presence of curves, straight sections or gradients along the route.

Another object of the present invention is to optimise the use of the computational resources necessary for the analysis and recognition of a significant event along a track, improving the operational efficiency of the system.

Another aspect of the present invention is to reduce the phenomenon of detection of so-called "false positives", which characterises traditional solutions. A false positive, in fact, corresponds to an erroneous evaluation of the acquired data as a result of which the occurrence of a significant event is signalled, for example the presence of an obstacle, when, in reality, it is not present or, if a foreign body is present, it does not interfere with transit along the track and thus does not correspond to a significant event.

The proposed method ensures high reliability in detection, improving safety and reducing the time required for analysis and verification along a track.

These and other objects are achieved by a computer-implemented method for the detection of a significant event along a track or in the vicinity thereof according to claim 1. The dependent claims specify further advantages of the computer-implemented method according to the invention.

The advantages offered by the computer-implemented method according to the invention are evident.

The computer-implemented method according to the invention makes it possible to process data acquired from at least one sensor and/or image acquisition device, to generate a dynamic track detection map that assists in identifying the occurrence of a significant event along a track or in its immediate vicinity, which could represent a hazard to circulation along said track. As stated, a significant event is the presence of an obstacle along the track or in the vicinity of the track itself. In particular, the obstacle may be fixed or moving relative to track 1.

Furthermore, the method makes it possible to filter data that, in traditional solutions, would be considered false positives, thereby improving the efficiency of the analysis of acquired environmental data.

The described method provides for several phases to analyse the route and identify potential hazards. A first phase concerns the acquisition of data by means of at least one sensor, which collects information on the configuration of the track, on the position of the horizon line and on the depth of the field of view. Subsequently, these data are processed to determine the conformation of the track and to define a track detection map that identifies the area to be monitored, within which to verify whether a significant event occurs.

To improve the accuracy of detection, the track detection map is divided into several interconnected sections, with dimensions that vary according to the position along the route. By means of a dynamic deformation system, the map adapts to the conformation of the track as well as to variations in a horizon line, allowing precise and true-to-life monitoring, even in complex situations, in the presence of curves or gradients.

### DESCRIPTION OF THE FIGURES

The present invention will now be described, by way of illustration but not limitation, according to its preferred embodiments, with particular reference to the Figures of the attached drawings, in which:

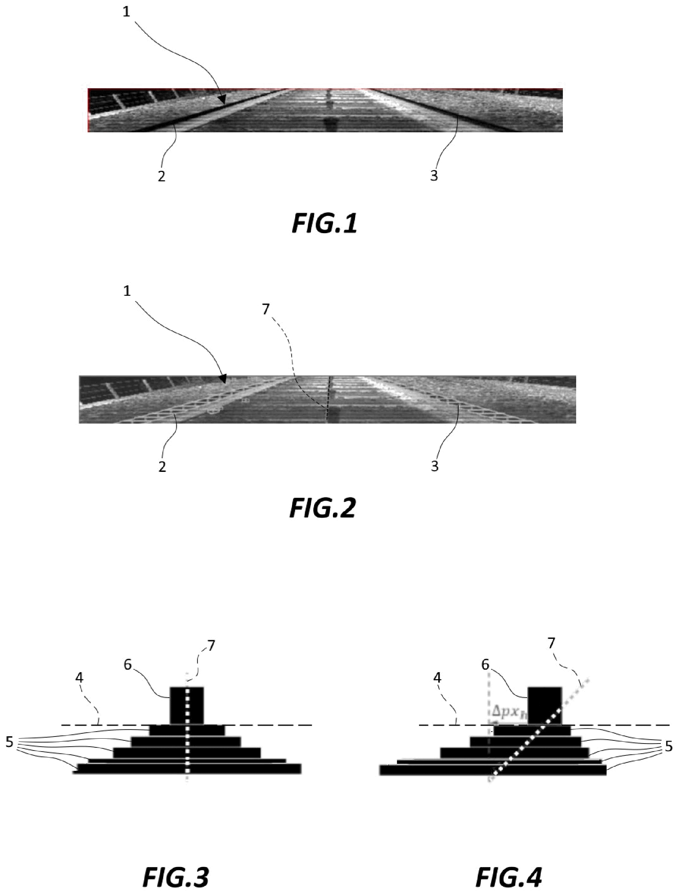

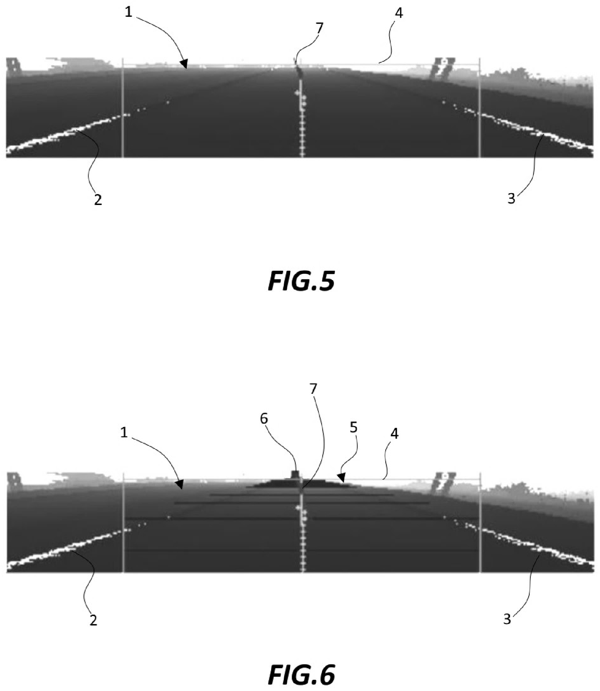

Figure 1 shows a detail view of a graphical processing of acquired data relating to a track;Figure 2 shows a detail view of the graphical processing referred to in Figure 1, to which information has been applied by means of the method according to the invention;Figures 3 and 4 show a schematic view of a track detection map according to the invention, in non-deformed configuration (Figure 3) and in deformed configuration (Figure 4);Figure 5 is a view of a processing of the data acquired by means of the method according to the invention;Figure 6 is a view of a further processing of the data acquired by means of the method according to the invention, including a track detection map referred to in Figure 3 or 4.

### DESCRIPTION OF THE INVENTION

In the following description, reference will be made to a computer-implemented method for analysing and detecting the occurrence of at least one significant event along the travel path of a vehicle on a track 1.

In particular, the computer-implemented method according to the invention, hereinafter referred to as the method for brevity, makes it possible to perform an adaptive analysis of a frontal section with respect to at least one sensor and/or at least one acquisition device, on board a railway vehicle, along a direction of travel.

In the following description, reference will be made to a significant event such as the detection of an obstacle along track 1 or in the vicinity of track 1, which may constitute an obstacle to normal circulation along said track 1.

The term "track" is intended to indicate a railway path delimited between a first rail 2 and a second rail 3, parallel to each other.

The term "obstacle", on the other hand, refers to an object having a predetermined minimum dimension. Preferably, the dimension is a height dimension understood as a dimension extending between a bottom portion and a top portion of the object. By way of example, a minimum height of an object to be considered as an obstacle may be defined as a dimension greater than the height of a rail head of the first rail 2 or of the second rail 3 with respect to their plane of bearing or base plate.

With regard to the at least one sensor and/or the at least one data acquisition device, generic reference will be made to sensors or acquisition devices capable of detecting morphological data of a surrounding environment, including data relating to depth of field.

By way of example and not limitation, a preferred embodiment of the method provides for the use of LiDAR sensors, to generate, in addition to a 3D point cloud, an intensity image of the return light signal, useful for highlighting the presence of reflective metallic objects, such as rails. Together with the LiDAR sensors, IMU (Inertial Measurement Unit) sensors may be used to stabilise and correct any distortions in the LiDAR data, in order to ensure a more accurate investigation.

It is understood that alternative embodiments of the method according to the invention are possible, in which, instead of LiDAR sensors, image acquisition devices capable of acquiring depth of field data are used, for example by means of stereoscopic image acquisition.

In the following description, therefore, the term "at least one sensor" or "at least one data acquisition device" will refer generically to any device capable of detecting environmental data by means of which to determine the morphology of a track, of a surrounding environment thereof, and suitable for obtaining depth of field data.

The at least one sensor or the at least one data acquisition device may be mounted on an autonomous-driving, crewless vehicle, configured to travel along a track, to perform an analysis of a railway section, implementing the method according to the invention. It is understood that the at least one sensor and/or the at least one data acquisition device may equally be installed on another type of railway vehicle, possibly crewed, within the scope of implementation of the method according to the present invention.

Hereinafter, therefore, the term "railway vehicle" refers indistinctly both to an autonomous-driving crewless railway vehicle and to a crewed railway vehicle, without any limitation.

The installation and calibration phase of the at least one sensor and/or the at least one data acquisition device on board the railway vehicle does not form the specific subject matter of the present invention and, therefore, will not be described further.

The method according to the invention comprises an initial phase of acquisition of environmental data relating to the morphology of a track 1, along a direction of travel.

The acquired data comprise information relating to a distance with respect to an acquisition point, in order to also define a depth of field along the direction of travel and, therefore, a depth image. A depth image is a preferably monochromatic image in which the colour tone of a single pixel is generated from the projection onto the image plane of a single point acquired by means of the sensors and represents a depth distance measured with respect to the sensor acquisition point.

The method comprises a subsequent phase of processing the environmental data to generate a graphical reconstruction of the morphology of track 1 within a spatial domain and to identify the position of the horizon line 4.

With reference to a possible embodiment of the computer-implemented method according to the invention, the spatial domain may be two-dimensional and correspond to an image plane. The term "image plane" is intended to indicate a geometric plane containing an image of track 1 according to a frontal perspective perpendicular to the visual axis, in which the image is in turn generated as a frontal region of a depth image.

With reference to an alternative embodiment, the spatial domain may be three-dimensional.

In the following description, reference will be made to a two-dimensional spatial domain, whilst understanding that the method according to the invention may equally be used in a graphical reconstruction of the morphology of track 1 within a three-dimensional domain.

The environmental data acquired by means of the at least one sensor are processed to obtain a schematisation of the position and conformation of a first rail 2 and a second rail 3 comprised in track 1 along the direction of travel.

For example, the first rail 2 and the second rail 3 may have a linear or curved course along the direction of travel. Consequently, the schematisation of the first rail 2 and of the second rail 3 is respectively linear or curved.

The method according to the invention makes it possible to identify and schematise the configuration of track 1 at least in a distal region, in the vicinity of the horizon line 4, and in a proximal region, that is to say a region close to the at least one sensor.

In the following description, the expression "depth map" will refer to a processing of the data detected in correspondence with the proximal region of the at least one sensor, and the expression "track detection map" will refer to a processing of the data detected in correspondence with a region distal from the at least one sensor, subsequent to the proximal region with respect to the direction of advancement along track 1.

According to one embodiment, the track detection map is positioned in correspondence with the horizon line 4, and is configured to identify any obstacles along track 1 in the vicinity of the horizon line 4 itself.

According to an alternative embodiment, the track detection map may be positioned differently, within a region of space comprised between the horizon line 4 and the at least one sensor and/or acquisition device.

The depth map and the track detection map are placed in succession with respect to each other along the direction of advancement.

In other words, proceeding along the direction of advancement, the depth map will be encountered first and subsequently the track detection map. The extension of the depth map along the direction of advancement, understood as the distance with respect to the at least one sensor along the direction of advancement, is established a priori. It follows that the distance of the track detection map with respect to the at least one sensor is also established a priori.

As stated, by means of the processing of the data it is possible to identify and graphically reconstruct the position of the horizon line 4 with respect to the first rail 2 and the second rail 3.

It is noted, in fact, that the position and/or inclination of the horizon line 4 may vary relative to the observation point from which the at least one sensor and/or the at least one data acquisition device perform the acquisition. By way of example, the position of the horizon line 4 may vary due to the gradient of track 1. In fact, if the railway vehicle travels along an uphill or downhill section of track 1, the horizon line 4 will appear to shift downwards or upwards respectively relative to the data acquisition point. Furthermore, the possible presence of irregularities, such as undulations or discontinuities (rail joints, ground subsidence, etc.), could cause oscillations in the at least one sensor, causing an apparent variation in the position of the horizon line 4. Furthermore, the presence of a curved section with inclination of track 1, that is to say a section in which track 1 is laterally inclined with superelevation of the outer rail on a curved section, may change the apparent position of the horizon line 4 as a function of the angle of inclination.

The method according to the invention comprises a definition phase, on the basis of the processed data, to define the depth map and the track detection map. These delimit respective detection areas by means of which to detect the occurrence of a significant event along the direction of travel, within track 1 and/or outside of it.

The depth map and the track detection map are graphical processings of the data detected by the at least one sensor, which are superimposed on the graphical reconstruction of the morphology of track 1, to allow the detection of any obstacles along the direction of travel.

With reference to the track detection map, this is a portion of an image or of a series of data comprising an organised structure of spatial information.

The following describes the features of the method according to the invention by means of which to define the features of the track detection map, given that those relating to the depth map do not form the specific subject matter of the invention.

The track detection map is dynamic, in the sense that it is deformable as a function of the graphical reconstruction of track 1, in order to be able to follow its morphology. The track detection map is, in fact, deformable to be adapted to the actual morphology of track 1, to allow the identification of the occurrence of significant events relative to the travel of the vehicle along track 1 itself, in particular in the vicinity of the horizon.

Furthermore, the position of the track detection map may be translated along a horizontal direction and/or a vertical direction to align it with the actual conformation of track 1 and with the positioning of the horizon line 4, conferring a high flexibility of use of the method, understood as the ability to be used with any configuration of track 1.

The track detection map comprises at least one area situated between the first rail 2 and the second rail 3. This area may be located entirely within the space delimited between the first rail 2 and the second rail 3, or it may extend to also include the first rail 2 and the second rail 3. Furthermore, according to a further alternative, the track detection map may comprise both the space between the first rail 2 and the second rail 3 and an area external to them, extending laterally to allow the evaluation of a region that simultaneously includes the interior and exterior of the first rail 2 and the second rail 3, depending on specific application requirements.

The method according to the invention provides for dividing the track detection map into a plurality of sections 5, which are stacked one on top of the other along the direction of travel.

The term "section" is intended to indicate indistinctly an elongated or substantially elongated region delimiting an area, as well as a linear section that corresponds substantially to a line.

With reference to what is illustrated by way of example in the attached Figures, see Figures 3, 4 and 6, each of the sections 5 is schematised as a region having a rectangular conformation. In particular, each of the sections 5 extends along a horizontal direction and a vertical direction, which are orthogonal to each other.

It is understood that, according to an alternative embodiment not illustrated in the attached Figures, the sections 5 may have a substantially rectangular or trapezoidal shape or, more generally, an elongated shape whose edges may be curved or jagged depending on the data detected by the at least one sensor.

In the attached Figure 3, by way of example but not limitation, a simplified configuration of a track detection map is shown, by means of which the distal portion of track 1 is monitored.

The track detection map comprises a plurality of sections 5 stacked in succession with each other and a top section 6, which is positioned at the top of the remaining sections 5.

In particular, the sections 5 have a variable width, where the term "width" indicates a dimension oriented along the horizontal direction, that is to say along a transverse direction with respect to the direction of travel along track 1.

The width of the sections 5 depends on the convergence of the first rail 2 and the second rail 3 in the vicinity of the horizon line 4, due to a perspective effect.

Due to perspective or, more generally, optical distortion phenomena in the vicinity of the horizon line 4, in fact, the first rail 2 and the second rail 3 appear closer to each other with respect to the at least one sensor, although in reality they are always at the same distance. For this reason, the individual sections 5 comprised in the track detection map have decreasing dimensions along the horizontal direction as they approach the horizon line 4. In other words, the individual sections 5 may have a decreasing extension at least along the horizontal direction, starting from a region distal with respect to the horizon line 4 approaching towards a region proximal to the horizon line 4 itself. Consequently, according to one embodiment of the method, the track detection map may overall have a conformation comparable to a trapezoid or substantially similar to a trapezoid.

It is understood that, according to alternative embodiments with respect to what is shown in the attached Figures, the track detection map has a conformation different from a trapezoid. For example, alternative embodiments of the method according to the invention are possible, in which the track detection map extends externally with respect to the first rail 2 and the second rail 3, thus presenting an overall irregular conformation, different from a trapezoid.

It is noted that the individual sections 5 may have a different height from each other, understood as a dimension that develops along the direction of travel (see, for example, Figure 5).

By way of example, the overall number and configuration of the individual sections 5 comprised in the track detection map are variable as a function of the precision and computational power available. The greater their number, the greater the required power. In this way it is possible to adapt the precision and the information analysed by the method according to the invention to specific application requirements (conformation of track 1, travelling speed, available computational power, etc.).

The top section 6 has an extension along the vertical direction, that is to say along a direction aligned or substantially aligned with the direction of travel, which is greater than that of each of the remaining sections 5.

Furthermore, the top section 6 has an extension along the horizontal direction that is less than that of each of the sections 5.

The method according to the invention provides for positioning the track detection map in such a way that the top section 6 is placed above the horizon line 4 (see Figure 5). In other words, the top section 6 is placed above the horizon line 4 and makes it possible to identify any obstacles in the vicinity of the horizon that extend at least partially within track 1 or in its immediate vicinity. It follows that the importance of being able to correctly determine the position of the top section 6 in the track detection map is evident.

The sections 5 and the top section 6 make it possible to effectively identify objects which, in traditional solutions, would be considered obstacles but which in reality may be false positives because they are located outside and far from track 1.

The method according to the invention provides for the dynamic deformation of the track detection map as a function of the acquired data relating to the conformation of track 1 and of the position of the horizon line 4 relative to track 1 itself.

In practice, being able to adapt the conformation of the track detection map to the morphology of track 1, it is possible to effectively detect the presence of any obstacles with respect to a predetermined area. In this regard, the method according to the invention comprises a phase of processing the conformation of track 1 and the position of the horizon line 4.

It is clarified that the term "position" referred to the horizon line 4 is intended to indicate, in a generic manner, the positioning of the horizon line 4 relative to track 1 as well as its inclination with respect to a horizontal direction. As described above, the horizon line 4, in addition to being able to shift in approach or in recession relative to the data acquisition point, depending on the presence of dips, ascents, descents etc., may vary its inclination in the vicinity of curved sections of track 1.

As stated, the track detection map may be deformed. Such deformation occurs in an organised manner according to a predefined logic. In particular, the individual sections 5 and the top section 6 are operatively connected to at least one reference element which, in turn, is defined on the basis of the conformation of track 1 detected by means of the at least one acquisition device.

Having determined the positioning of the at least one reference element, the position and conformation of the track detection map are determined.

As will be better described below, the reference element is processed on the basis of the data acquired by the at least one sensor relative to the conformation of track 1.

In accordance with one embodiment of the method according to the invention, the environmental data acquired by the at least one sensor are processed by means of computer vision techniques.

These make it possible to recognise the morphology of the frontal environment with respect to the at least one acquisition device along the direction of travel and thus to determine the position of the at least one reference element.

Furthermore, by means of computer vision techniques it is possible to extrapolate the outline of the first rail 2 and of the second rail 3, as well as to allow the identification of the horizon line 4 or of further reference elements relative to track 1.

For example, determining the morphology of track 1, with particular reference to the position and conformation of the first rail 2 and of the second rail 3, makes it possible to establish the horizontal width of the various sections 5 and of the top section 6, depending on the specific requirements previously described (track detection map comprised within the space delimited between the first rail 2 and the second rail 3, or also comprising the first rail 2 and the second rail 3, or also extending outside the first rail 2 and the second rail 3).

According to one embodiment of the method that is the subject of the invention, the at least one reference element corresponds to a track centre point.

The expression "track centre point" is intended to indicate a median distance comprised between the first rail 2 and the second rail 3 along the horizontal direction.

The track centre points are determined from the graphical processing of the first rail 2 and the second rail 3. In general, these track centre points are offset from each other along the direction of travel. The track centre points are organised in a list as a function of a respective distance along the direction of travel, with respect to the data acquisition point.

The number of reference elements calculated may vary as a function of the computational power and/or the resolution in the acquisition of environmental data available, the quantity of data to be processed and the precision sought. Evidently, the greater the number of reference elements to be calculated, the greater the computational power required by the system.

According to an alternative embodiment of the method, not shown in detail in the attached Figures, the deformation of the track detection map provides for the use of a different reference element, on the basis of which to command the deformation and/or positioning of the map itself. By way of example, the configuration of the first rail 2 or of the second rail 3 may be used to calculate respective reference elements, or structures that develop vertically on the sides of track 1 and that follow its course, or, further, overhead electrical lines.

The individual reference elements thus determined are operatively connected to each other by means of at least one interpolation line 7 (see, for example, Figures 5 and 6).

By way of example, according to one embodiment, the interpolation is carried out using linear lines. In this way, it is possible to optimise the required computational power. However, alternative embodiments may be considered, in which the interpolation is performed by means of more complex functions, such as splines, higher-order polynomials or other non-linear functions, to obtain greater accuracy at the cost of greater computational cost.

According to one embodiment, the at least one interpolation line 7 is calculated in terms of inclination as a moving average between interpolations carried out on lists of reference elements consecutive in temporal terms, with respect to consecutive frames or consecutive graphical representations.

The number of interpolation lines 7 varies as a function of the number of regions into which the data acquired in a space comprised between the acquisition device and the horizon line 4 are divided. The division occurs along the direction of advancement. In the case where multiple interpolation lines 7 are used, these are operatively connected to each other to approximate the course of track 1 as a function of its actual morphology.

The approximation with which the course of track 1 is determined may be adjusted from time to time to adapt to specific operational requirements, by varying, for example, the numbers of reference elements considered or the type of interpolation used, thus balancing the accuracy of the reconstruction of the morphology of track 1 with the available or required computational power.

The method according to the invention comprises a calculation phase for each of the sections 5 of a respective midpoint, which defines a centre or substantially a geometric centre.

The term "midpoint" is intended to indicate a geometric centroid, a geometric equivalent of a centre of mass. By way of example, with reference to a section 5 having a rectangular conformation, the midpoint corresponds to the centre of the rectangle, that is to say the point at which the internal diagonals of the rectangle intersect.

Similarly, the method comprises a phase of calculating the midpoint for the top section 6.

The method that is the subject of the invention comprises a phase of operative connection between the track detection map and the at least one reference element, to adapt the position of the map and its conformation to the conformation of track 1 as detected.

Recalling what was previously described, the method comprises a phase of operative connection between the midpoint of each of the sections 5 and of the top section 6 to the at least one reference element. More precisely, this connection phase comprises connecting the midpoint of each of the sections 5 and of the top section 6 to the at least one interpolation line 7.

As a result of this operative connection, following a variation in the curvature of track 1 detected along the direction of travel, a variation in the reciprocal position of the individual reference elements is determined and, consequently, a variation in the position and/or inclination of the at least one interpolation line 7.

By way of example, the presence of a curved section of track 1 in the vicinity of the horizon line 4 determines a progressive displacement of the reference elements in the vicinity of the horizon line 4 itself along a transverse direction with respect to the direction of travel along track 1. It follows that the at least one interpolation line 7 varies its inclination and/or position with respect to the direction of travel.

Each midpoint of the sections 5 and of the top section 6, being operatively connected to the at least one interpolation line 7, follows its displacement, understood as translation and/or inclination with respect to the direction of travel.

By way of example, in the case where the at least one interpolation line 7 is of the linear type, a variation in the angle of inclination that the at least one interpolation line 7 assumes with respect to the direction of travel determines the deformation of the track detection map, understood as the reciprocal displacement between the individual sections 5 and between these and the top section 6.

In the attached Figure 3, a track detection map in standard non-deformed configuration is shown schematically by way of example, corresponding to a straight conformation of track 1.

In practice, when the track detection map is in non-deformed configuration, the individual sections 5 and the top section 6 are aligned, with their respective midpoints aligned with each other along the direction of travel.

In the attached Figure 4, on the other hand, a possible deformation of the track detection map is shown schematically, corresponding to a curved course of track 1 in the vicinity of the horizon line 4. As a result of the curvature of track 1 in the vicinity of the horizon line 4, the individual reference elements have a course along the direction of travel such as to determine an inclination of the at least one interpolation line 7. It follows that the midpoints of the individual sections 5 and of the top section 6 move consistently with the inclination of the at least one interpolation line 7, determining a translation of the sections 5 and of the top section 6 themselves.

The method according to the invention provides for a phase of controlling the position of the track detection map with respect to the graphical reconstruction of the morphology of track 1, to ensure that the track detection map is correctly positioned with respect to the morphology of track 1, as detected.

The method according to the invention comprises a phase of horizontal translation of the track detection map to synchronise it with the most recent data relating to the graphical reconstruction of track 1.

The phase of block horizontal translation of the track detection map provides for calculating the midpoint of a first bottom section 5 with respect to the horizontal position of a reference element taken as a reference for said first bottom section 5.

The bottom section 5 corresponds to the section 5 closest to a bottom portion of the region into which the graphical reconstruction of track 1 is divided. As previously described, in fact, the graphical reconstruction of track 1 may be divided into several regions, in succession with each other along the direction of advancement along track 1.

In the case where there is a horizontal misalignment between the track detection map and the graphical reconstruction of track 1, that is to say between the position of the bottom section 5 and a respective portion of the at least one interpolation line 7 to which it is operatively connected, it is possible to correct the horizontal positioning of the entire track detection map in block, to align it with the actual conformation of track 1.

Furthermore, if track 1 has a curved course in the vicinity of the horizon line 4, the method, as described, provides for deforming the track detection map to adapt it to the actual conformation of track 1 and, if necessary, translating it in block along the horizontal direction to allow the track detection map to correctly copy the graphical processing of track 1 along the direction of travel.

The track detection map therefore has two horizontal translation components of the sections 5 and the top section 6: a first component operatively connected to a rigid, block displacement of all the sections 5 and the top section 6, and a second horizontal component due to the relative horizontal translation of the individual sections 5 and of the top section 6 as a result of a change in position of the at least one interpolation line 7, to which they are operatively connected.

The method according to the invention provides for a phase of verifying the horizontal translation of the track detection map on the basis of a check of the positioning of the at least one interpolation line 7 with respect to a first section 5, taken as a reference point. In the positive case, the translation is confirmed and the horizontal block positioning of the track detection map is updated. In the contrary case, the translation is interrupted to avoid errors.

At the end of this process, the track detection map is aligned with the most upto-date data relating to the graphical reconstruction of track 1.

In particular, in the case where the at least one sensor is a multi-layer (or multi-channel) LiDAR sensor, the control and correction phase comprises performing a check of whether track 1 as detected is correctly aligned with a first channel of the LiDAR sensor. In the case where the at least one sensor identifies a valid channel, the translation would be confirmed and the map coordinates updated accordingly. In the case where the channel is not valid, the translation would be interrupted to avoid errors.

The expression "first channel" refers to a lower laser beam emitted by a multi-layer (multi-channel) LiDAR sensor as well as to a virtual channel that is calculated with criteria different from the physical positioning of the laser. In other words, the "first channel" corresponds to a lowest calculated horizontal coordinate among a range of horizontal coordinates closest to the horizon.

The first channel is used as a reference to verify that track 1 has been detected in the correct position.

This verification makes it possible to avoid errors due to disturbances in the data, for example following anomalous reflections that could lead to an erroneous translation of the track detection map.

The comparison between the estimated position of track 1 and the position detected by the at least one sensor ensures that the translation of the track detection map is accurate and consistent with the real data.

According to an alternative embodiment, the at least one sensor for acquiring data on the environment comprises stereoscopic cameras. According to this version, the phase of processing the acquired data comprises the analysis of images provided by these stereoscopic cameras, to reconstruct a three-dimensional model of track 1 along the direction of travel. It follows that the phase of horizontal translation of the track detection map is determined by comparing predetermined points of track 1 between successive frames, calculating any average deviation and updating the track detection map accordingly.

The method according to the invention comprises a phase of alignment of the track detection map along the vertical direction, in response to a displacement of the horizon line 4.

The phase of vertical translation of the track detection map provides for moving the entire map upwards or downwards based on the position of the horizon line 4 as obtained from the graphical reconstruction of the data acquired by means of the at least one sensor, ensuring that the position of the track detection map is effectively aligned with the horizon line 4 along the direction of travel.

The vertical translation phase provides for acquiring data relating to the conformation of track 1 and, in particular, to the position of the horizon line 4.

By way of example, the calculation of the position of the horizon line 4 is determined by means of a moving average of the heights detected, reducing undesired fluctuations due to the sensitivity of the at least one sensor or to momentary variations in the morphology of track 1 (ascents, descents, irregularities, etc.).

The method according to the invention comprises a phase of detecting any obstacles within or in the vicinity of the track detection map and of assigning a danger index based on their position and distance of the object relative to the track detection map.

By way of example, the method provides for supplying specific values of the danger index to distinguish whether a violation, understood as the presence of an obstacle along or in the vicinity of track 1, occurs within the track detection map or in its vicinity, and to establish specific actions to be imparted to the dynamics of the vehicle transiting along track 1.

With reference to what has been described above, it is evident that the method for detecting any obstacles along a railway line according to the invention is capable of achieving the intended objects and of overcoming the drawbacks of traditional methods.

The method according to the invention, in fact, makes it possible to acquire and process with precision the actual morphology of track 1, including data relating to the position of the horizon line 4. On the basis of this graphical processing it is possible to effectively determine the position and conformation of a track detection map by means of which to identify the occurrence of a significant event, such as for example the presence of an obstacle, in the vicinity of track 1 or within it.

In particular, the possibility of dynamically deforming the track detection map during advancement along track 1 makes it possible to monitor, with sufficient advance, in a precise manner the possible presence of obstacles in the vicinity of the horizon line 4, that is to say in a distal zone with respect to the at least one acquisition sensor, regardless of the presence of curves or gradients.

Furthermore, the position of the entire track detection map may be translated along a horizontal direction and/or along a vertical direction, to effectively update the relative positioning of the track detection map with respect to the graphical reconstruction of the morphology of track 1.

The method according to the invention, by making it possible to detect significant events in the vicinity of the horizon line 4 and to effectively distinguish them from events that, in traditional solutions, correspond to false positives, makes it possible to carry out effective control of the dynamics of a vehicle in transit along track 1, improving the accuracy and optimisation of monitoring.

In the foregoing, some embodiments have been described and variants of the present invention have been suggested, but it is to be understood that persons skilled in the art will be able to make modifications and changes without thereby departing from the relevant scope of protection, as defined by the attached claims.

## Claims

1. Computer-implemented method for detecting at least one significant event along a track (1), said method comprising the steps of:
- acquiring data by means of at least one sensor and/or at least one data acquisition device, relating to a morphology of said track (1) or of an environment in the vicinity of said track (1) along said direction of travel, wherein said data also comprise information relating to a distance with respect to an acquisition point of said data, to define a depth of field;
- processing said data to obtain a graphical reconstruction of said track (1) and to determine a position and/or orientation of a horizon line (4) towards which said track (1) tends;
- defining, on the basis of said data, at least one reference element representative of the conformation of said track (1);
- generating, on the basis of a graphical reconstruction of said processed data, a track detection map which in turn delimits a detection zone of interest interposed between said horizon line (4) and said at least one sensor and/or at least one data acquisition device, or in the vicinity of said horizon line (4);
- superimposing said track detection map on said graphical reconstruction of said track (1), positioning said track detection map in a position interposed between said horizon line (4) and said at least one sensor and/or at least one data acquisition device;
- modifying the position and/or deforming said track detection map as a function of the position of said reference element and of the position of said horizon line (4);
- detecting the presence of any significant event along said track (1) within or in the vicinity of said track detection map.

2. Computer-implemented method according to claim 1, wherein said track detection map comprises a plurality of sections (5) and a top section (6) stacked in succession with each other along said direction of travel, wherein said sections (5) and said top section (6) are operatively connected to said at least one reference element.

3. Computer-implemented method according to claim 1, comprising a phase of interpolation of the reference elements, wherein said phase provides for the definition of at least one interpolation line to operatively connect the reference elements to each other.

4. Computer-implemented method according to claims 2 and 3, comprising a phase of defining a midpoint for each of said sections (5) and for said top section (6), and of operatively connecting each midpoint to said at least one interpolation line.

5. Computer-implemented method according to claim 4, wherein said phase of modifying the position and/or conformation of said track detection map provides for connecting each of said midpoints of said sections (5) and of said top section (6) to said at least one interpolation line (7) and modifying the position and/or inclination of said at least one interpolation line (7) on the basis of said graphical processing of said track (1), so as to cause a translation or deformation of said track detection map in accordance with a conformation of said track (1) reconstructed by means of said reference elements.

6. Computer-implemented method according to claim 1, wherein said sections (5) have dimensions that are variable relative to each other along a horizontal direction which, in turn, is transverse with respect to said direction of travel along said track (1), said variable dimensions conforming to a perspective deformation of said graphical reconstruction of the morphology of said track (1) along said direction of travel, and/or wherein said sections (5) have variable dimensions along a vertical direction that is normal to said horizontal direction.

7. Computer-implemented method according to claim 5, wherein said sections (5), starting from a region distal with respect to said horizon line (4) approaching towards a region proximal to said horizon line (4), have a decreasing extension along said horizontal direction.

8. Computer-implemented method according to claim 1, wherein said top section (6) is placed above said horizon line (4) along said direction of travel and said sections (5) are positioned below said horizon line (4).

9. Computer-implemented method according to claim 1, comprising a phase of adjusting the position of said track detection map along a direction parallel to said direction of travel, to align the position of said top section (6) with respect to said horizon line (4).

10. Computer-implemented method according to claim 1, comprising a phase of generating a danger index as a function of the occurrence of a significant event, said significant event being capable of occurring within said track detection map.

11. Computer-implemented method according to claim 3, wherein said at least one interpolation line (7) is calculated in terms of inclination as a moving average between interpolations carried out on lists of reference elements consecutive in temporal terms, with respect to consecutive frames or consecutive graphical representations.

12. Computer-implemented method according to claim 1, comprising a phase of verifying the horizontal translation of said track detection map on the basis of a check of the positioning of the at least one interpolation line (7) with respect to a first section (5), taken as a reference point.

13. Computer-implemented method according to claim 1, comprising a phase of aligning said track detection map along the vertical direction in response to a displacement of said horizon line (4), wherein said phase of vertical translation of said track detection map provides for moving the entire map upwards or downwards based on the position of said horizon line (4), so that the position of said track detection map is aligned with said horizon line (4) along said direction of travel.

14. Computer-implemented method according to claim 10, wherein said phase of generating a danger index provides for supplying specific values of said danger index to distinguish whether a significant event, understood as the presence of an obstacle along or in the vicinity of said track (1), occurs within said track detection map or in its vicinity.
